# EUROPEAN PATENT APPLICATION

(11) **EP 1 675 289 A1**
(43) Date of publication of application: **28.06.2006**
(21) Application number: 04293119.6
(22) Date of filing: 23.12.2004
(51) Int. Cl.: H04H 9/00

(54) **System comprising a receiving device for receiving broadcast information**

(71) Applicant: ALCATEL, 75008 Paris (FR)
(72) Inventor: Mampaey, Marcel Joseph Louis, 1090 Brussels (BE)
(74) Representative: Narmon, Gisèle Marie Thérèse

(57) **Abstract**

Systems (I) comprising receiving devices (2) for receiving broadcast information from sources (3), which is converted into audio/video information, are made more user friendly by introducing triggering devices (4) for, in response to user actions, transmitting selection information defining parts of the broadcast information to collecting apparatuses (5) and by retrieving additional information linked to the part of the broadcasting information. The user only needs to activate the transmission of the selection information, and then the additional information is retrieved automatically, from the sources (3) or from other media (6). The broadcast information comprises part codes defining the parts of the broadcast information and/or comprises source codes defining the sources (3), and the systems (1) further comprise time/date stamp adders (25,45,55) for adding time/date stamps to the source codes. Memories (26,46,56) store user profiles. The collecting apparatuses (5) might be third party collecting apparatuses for collecting additional information such as songs in WAV format and for sending a collection of additional information such as an audio CD to the user.

## Description

The invention relates to a system comprising a receiving device for receiving broadcast information from a source, which receiving device comprises a converter for converting the broadcast information into audio/video information perceptible to a user.

The source for example comprises a television station or a radio station or an internet network station. The audio/video information comprises audio information and/or video information.

A prior art system is of common general knowledge and comprises for example a receiving device in the form of a television receiver in case of the source being a television station or in the form of a radio receiver in case of the source being a radio station or in the form of an internet personal computer in case of the source being an internet network station. The television receiver and the internet personal computer comprise screens for displaying the video information and the television receiver, the radio receiver and the internet personal computer comprise loudspeakers for reproducing the audio information.

A user when watching the video information might see things that are interesting, such as a band performing on stage, a video commercial, a video discussion etc. and a user when listening to the audio information might hear things that are interesting, such as a song, an audio commercial, an audio discussion etc. Sometimes this user would like to get additional information, such as a name of the band, a price of a product or a service shown in the video commercial, the names of the people participating in the video discussion, a name of the song, a price of a product or a service mentioned in the audio commercial, a subject of the audio discussion etc. In that case the user must either wait and pay close attention for a certain amount of time until the additional information is given, and then write it down or memorize it, or, in case the additional information is not given, the user must perform a research. This all is relatively user unfriendly.

The known system is disadvantageous, inter alia, owing to the fact that it is relatively user unfriendly.

It is an object of the invention, inter alia, to provide a system as defined above which is relatively user friendly.

The system according to the invention is characterized in that the system further comprises a triggering device for, in response to a user action from the user, transmitting selection information defining a part of the broadcast information to a collecting apparatus different from said source, which collecting apparatus comprises a retriever for, in response to a reception of the selection information, retrieving additional information linked to the part of the broadcasting information.

By introducing the triggering device for, in response to a user action from the user, transmitting selection information defining a part of the broadcast information to a collecting apparatus, and by introducing the collecting apparatus comprising a retriever for, in response to a reception of the selection information, retrieving additional information linked to the part of the broadcasting information, the user no longer needs to write things down or to memorize things or to perform a research. The user only needs to activate the transmission of the selection information, then the additional information is retrieved automatically, from the source or from an other medium. As a result, the system according to the invention is more user friendly.

The receiving device and the triggering device may be integrated into one housing, or the triggering device and the collecting apparatus may be integrated into one housing, or the receiving device and the collecting apparatus may be integrated into one housing, or both devices and the apparatus may be integrated into one housing, or each one of the devices and the apparatus may have its own housing.

An embodiment of the system according to the invention is characterized in that the broadcast information comprises a part code defining the part of the broadcast information, the receiving device comprising a supplier for supplying the part code to the triggering device, and the selection information comprising the part code.

By supplying the part code from the receiving device to the triggering device, which part code defines the part of the broadcast information which is interesting to the user, the selection information can be provided with the part code. This part code may for example comprise a teletext code or a radio decoding signal code or an internet protocol address or a universal resource location. The part code will be sufficient to identify the interesting part of the broadcast information.

An embodiment of the system according to the invention is characterized in that the broadcast information comprises a source code defining the source, the receiving device comprising a supplier for supplying the source code to the triggering device, and the selection information comprising the source code, the system further comprising a time/date stamp adder for adding a time/date stamp to the source code.

By supplying the source code from the receiving device to the triggering device, which source code defines the source which broadcasts the broadcast information that is interesting to the user, the selection information can be provided with the source code. This source code may for example comprise a teletext code or a radio decoding signal code or an internet protocol address or a universal resource location. By introducing the time/date stamp adder, for example either in the receiving device (advantage: close to the broadcast information) or in the triggering device (advantage: close to the selection signal) or in the collecting apparatus (advantage: close to the retriever), a time/date stamp can be added to the source code. The combination of the source code and the time/date stamp will be sufficient to identify the interesting part of the broadcast information.

An embodiment of the system according to the invention is characterized in that the system further comprises a memory for storing a user profile.

By introducing the memory, for example either in the receiving device (advantage: close to the broadcast information) or in the triggering device (advantage: close to the selection signal) or in the collecting apparatus (advantage: close to the retriever), a user profile can be stored. Such a user profile can for example be used for storing user preferences for increasing an accuracy of the part code and/or of the combination of the source code and the time/date stamp. In fact, the user profile might be used to use shorter part codes and/or to use shorter combinations of the source code and the time/date stamp. Preferably, the user profile will be adjustable by the user.

An embodiment of the system according to the invention is characterized in that the system further comprises a comparator for comparing a parameter of the additional information with a threshold.

By introducing the comparator, for example in the collecting apparatus, a parameter of the additional information can be compared with one or more thresholds. This way, in case the parameter defines the costs of the additional information, a cost limit can be defined by the threshold, or in case the parameter defines the size of the additional information, a size limit can be defined by the threshold. The thresholds may form part of the user profile.

An embodiment of the system according to the invention is characterized in that the system further comprises a requester for requesting the user for a confirmation.

By introducing the requester, for example either in the receiving device (advantage: close to the broadcast information) or in the triggering device (advantage: close to the selection signal) or in the collecting apparatus (advantage: close to the retriever), the user can be requested to come up with a confirmation. This way, in case a parameter exceeds a threshold, a confirmation is to be given, and in case a user profile is used for increasing an accuracy of the part code and/or of the combination of the source code and the time/date stamp, a confirmation is to be given.

An embodiment of the system according to the invention is characterized in that the system further comprises a counter for counting the selection information.

By introducing the counter, for example either in the triggering device (advantage: close to the selection signal) or in the collecting apparatus (advantage: close to the retriever), the selection information can be counted, for example per part code or per source code or per time/date stamp. This way, statistics will become available, for example for adjusting the user profile.

An embodiment of the system according to the invention is characterized in that the collecting apparatus is a third party collecting apparatus comprising a collector for collecting additional information linked to parts of the broadcasting information and for sending a collection of additional information to the user.

The third party collecting apparatus is for example used for retrieving additional information such as for example songs in WAV format linked to parts of the broadcasting information such as the corresponding songs broadcasted by the source, and is for example used for collecting the songs in WAV format and for, as soon as a sufficient number of songs have been collected, writing them on a CD. This (audio) CD is to be transmitted to the user. The selection signals counted mostly may then indicate the most popular song, which is to be written firstly, etc. The third party collecting apparatus may pay the bill for retrieving the additional information, and may send a higher bill to the user for the retrieving of the additional information and for the services.

In case of the collecting apparatus being a third party collecting apparatus, the selection information might further comprise a user code defining the user or a location code defining the user's house and/or the user's devices.

The invention also relates to a receiving device for use in a system as defined above comprising the receiving device for receiving broadcast information from a source, which receiving device comprises a converter for converting the broadcast information into audio/video information perceptible to a user, characterized in that the system further comprises the triggering device for, in response to a user action from the user, transmitting selection information defining a part of the broadcast information to a collecting apparatus different from said source, which collecting apparatus comprises a retriever for, in response to a reception of the selection information, retrieving additional information linked to the part of the broadcasting information, the receiving device comprising a supplier for supplying a code to the triggering device, and the selection information comprising the code.

The invention also relates to a triggering device for use in a system as defined above comprising a receiving device for receiving broadcast information from a source, which receiving device comprises a converter for converting the broadcast information into audio/video information perceptible to a user, characterized in that the system further comprises the triggering device for, in response to a user action from the user, transmitting selection information defining a part of the broadcast information to a collecting apparatus different from said source, which collecting apparatus comprises a retriever for, in response to a reception of the selection information, retrieving additional information linked to the part of the broadcasting information.

The invention also relates to a collecting apparatus for use in a system as defined above comprising a receiving device for receiving broadcast information from a source, which receiving device comprises a converter for converting the broadcast information into audio/video information perceptible to a user, characterized in that the system further comprises a triggering device for, in response to a user action from the user, transmitting selection information defining a part of the broadcast information to the collecting apparatus different from said source, which collecting apparatus comprises a retriever for, in response to a reception of the selection information, retrieving additional information linked to the part of the broadcasting information.

The invention also relates to a method for use in a system as defined above and comprising a receiving step of receiving broadcast information from a source and a converting step of converting the broadcast information into audio/video information perceptible to a user, characterized in that the method further comprises a triggering step of, in response to a user action from the user, transmitting selection information defining a part of the broadcast information to a collecting apparatus different from said source and a retrieving step of, in response to a reception of the selection information, retrieving additional information linked to the part of the broadcasting information.

The invention also relates to a processor program product for use in a system as defined above and comprising a receiving function of receiving broadcast information from a source and a converting function of converting the broadcast information into audio/video information perceptible to a user, characterized in that the processor program product further comprises a triggering function of, in response to a user action from the user, transmitting selection information defining a part of the broadcast information to a collecting apparatus different from said source and a retrieving function of, in response to a reception of the selection information, retrieving additional information linked to the part of the broadcasting information.

Embodiments of the receiving device according to the invention and of the triggering device according to the invention and of the collecting apparatus according to the invention and of the method according to the invention and of the processor program product according to the invention correspond with the embodiments of the system according to the invention.

The invention is based upon an insight, inter alia, that in case the additional information is given, it is user unfriendly to be required to write down or memorize such additional information, and in case the additional information is not given, it is user unfriendly to be required to perform a research, and is based upon a basic idea, inter alia, that a triggering device is to be introduced for, in response to a user action from the user, transmitting selection information defining a part of the broadcast information to a collecting apparatus, and that a collecting apparatus is to be introduced comprising a retriever for, in response to a reception of the selection information, retrieving additional information linked to the part of the broadcasting information.

The invention solves the problem, inter alia, to provide a system as defined above which is relatively user friendly, and is advantageous, inter alia, in that the system according to the invention is more user friendly.

These and other aspects of the invention will be apparent from and elucidated with reference to the embodiments(s) described hereinafter.
Fig. 1 shows diagrammatically a system according to the invention comprising a receiving device according to the invention, a triggering device according to the invention and a collecting device according to the invention,
Fig. 2 shows diagrammatically a receiving device according to the invention in greater detail,
Fig. 3 shows diagrammatically a triggering device according to the invention in greater detail, and
Fig. 4 shows diagrammatically a collecting device according to the invention in greater detail.

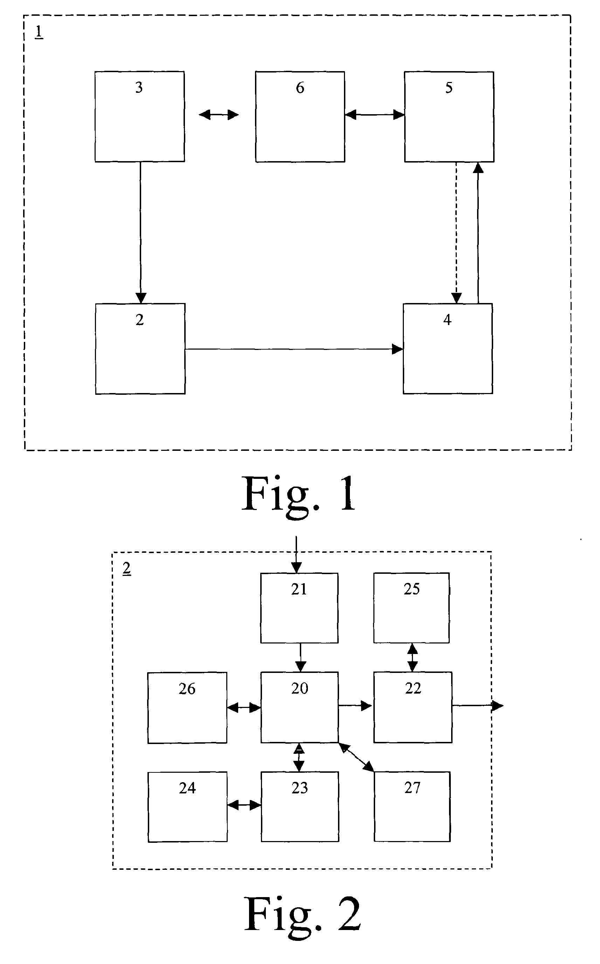

The system 1 according to the invention shown in Fig. 1 comprises a receiving device 2 according to the invention coupled to a source 3 via a wired or a wireless connection, a triggering device 4 according to the invention coupled to the receiving device 3 via a wired or a wireless connection, and a collecting device 5 according to the invention coupled to the triggering device 4 via a wired or a wireless connection. The collecting device 5 is either coupled to the source 3 via a wired or a wireless connection or to a medium 6 via a wired or a wireless connection. The medium 6 may be linked to the source 3.

The receiving device 2 according to the invention shown in Fig. 2 in greater detail comprises a receiver 21 for receiving broadcast information from the source 3, a processor system 20 coupled to the receiver 21 and further coupled to a converter 23 for converting the broadcast information into audio/video information perceptible to a user. Thereto, the converter 23 is further coupled to a man machine interface 24. The processor system 20 is further coupled to a memory 26 for storing a user profile of the user and to a supplier 22 for supplying a code to the triggering device 4 and to a requester 27 for requesting the user for a confirmation. The supplier 22 is further coupled to a time/date stamp adder 25 for adding a time/date stamp to the code.

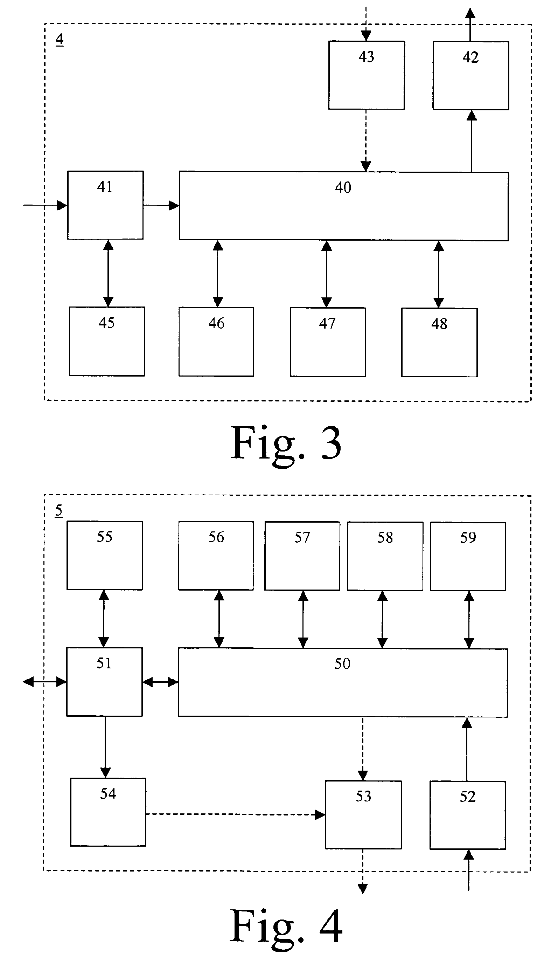

The triggering device 4 according to the invention shown in Fig. 3 in greater detail comprises a receiver 41 for receiving the code from the receiving device 2 and comprises a processor system 40 coupled to the receiver 41 and further coupled to a transmitter 42 for transmitting selection information defining a part of the broadcast information to the collecting apparatus 5 and further coupled to a further receiver 43. The receiver 41 is coupled to a time/date stamp adder 45. The processor system 40 is further coupled to a memory 46 for storing a user profile, a requester 47 for requesting the user for a confirmation and a counter 48 for counting the selection information.

The collecting apparatus 5 according to the invention shown in Fig. 4 in greater detail comprises a retriever 51 for retrieving additional information linked to a part of the broadcasting information which part is defined by the selection information and comprises a processor system 50 coupled to the receiver 51 and further coupled to a receiver 52 for receiving the selection information from the triggering device 4 and further coupled to a transmitter 53. The retriever 51 is coupled to a time/date stamp adder 55 and to a collector 54 which is for example further coupled to the transmitter 53. The processor system 50 is further coupled to a memory 56 for storing a user profile, a requester 57 for requesting the user for a confirmation, a counter 58 for counting the selection information and a comparator 59 for comparing a parameter of the additional information with a threshold.

The source 3 for example comprises a television station or a radio station or an internet network station. The audio/video information comprises audio information and/or video information. The receiving device 2 might be in the form of a television receiver in case of the source 3 being a television station or might be in the form of a radio receiver in case of the source 3 being a radio station or might be in the form of an internet personal computer in case of the source 3 being an internet network station. The television receiver and the internet personal computer comprise screens for displaying the video information and the television receiver, the radio receiver and the internet personal computer comprise loudspeakers for reproducing the audio information. The radio receiver might comprise a screen/display for displaying a radio decoding signal, whereby more info can be broadcasted than just a channel identification. Today some radio receivers can broadcast a band name and a song title which are displayed on the radio receiver's screen/display. These screens and displays and loudspeakers form part of the man machine interface 24.

In a prior art situation, a user when watching the video information might see things that are interesting, such as a band performing on stage, a video commercial, a video discussion etc. and a user when listening to the audio information might hear things that are interesting, such as a song, an audio commercial, an audio discussion etc. Sometimes this user would like to get additional information, such as a name of the band, a price of a product or a service shown in the video commercial, the names of the people participating in the video discussion, a name of the song, a price of a product or a service mentioned in the audio commercial, a subject of the audio discussion etc. In that case the user must either wait and pay close attention for a certain amount of time until the additional information is given, and then write it down or memorize it, or, in case the additional information is not given, the user must perform a research. This all is relatively user unfriendly.

According to the invention, the triggering device 4 is introduced for, in response to a user action from the user, transmitting selection information defining a part of the broadcast information to the collecting apparatus 5 different from said source 3, which collecting apparatus 5 comprises the retriever 51 for, in response to a reception of the selection information, retrieving additional information linked to the part of the broadcasting information. Then the user no longer needs to write things down or to memorize things or to perform a research. The user only needs to activate the transmission of the selection information, then the additional information is retrieved automatically, from the source 3 or from the medium 6, such as a web site. As a result, the system 1 according to the invention is more user friendly.

The additional information might for example be sent back to the triggering device 4 via the transmitter 53 and the further receiver 43. Alternatively, this additional information might for example be sent back to the receiving device 2 via the transmitter 53 and a further receiver of the receiving device not shown and via a wired or a wireless connection.

In a most simple embodiment, the user must indicate through the user action which part of the broadcasting information is interesting to the user, and/or the user must indicate from which source 3 this broadcasting information is coming etc. This all still requires the user to do more than for example just press a button or activate an icon etc. Alternatively, the triggering device 4 might be adjusted with certain information, for example defining that a first button corresponds with a first source and that a second button corresponds with a second source etc. But this requires the user to do something before the user can start to use the triggering device 4 and is a relatively static solution.

In a more advanced embodiment, the broadcast information comprises a part code defining the part of the broadcast information, which part code is supplied via the supplier 22 to the triggering device 4 for providing the selection information with this part code. The part code may for example comprise a teletext code or a radio decoding signal code or an internet protocol address or a universal resource location etc. The part code will be sufficient to identify the interesting part of the broadcast information.

In an other more advanced embodiment, the broadcast information comprises a source code defining the source 3, which source code is supplied via the supplier 22 to the triggering device 4 for providing the selection information with this source code. Via the time/date stamp adder 25, 45 and/or 55, a time/date stamp can be added to the source code. This source code may for example comprise a teletext code or a radio decoding signal code or an internet protocol address or a universal resource location etc. The combination of the source code and the time/date stamp will be sufficient to identify the interesting part of the broadcast information.

The memory 26, 46 and/or 56 is used for storing a user profile. Such a user profile can for example be used for storing user preferences for increasing an accuracy of the part code and/or of the combination of the source code and the time/date stamp. In fact, the user profile might be used to use shorter part codes and/or to use shorter combinations of the source code and the time/date stamp. Preferably, the user profile will be adjustable by the user.

The comparator 59 compares a parameter of the additional information with a threshold. In case the parameter defines the costs of the additional information, a cost limit can be defined by the threshold, or in case the parameter defines the size of the additional information, a size limit can be defined by the threshold. The thresholds may form part of the user profile. Other parameters are not to be excluded.

The requester 27, 47 and/or 57 requests the user for a confirmation. For example in case a parameter exceeds a threshold, a confirmation is to be given, and in case a user profile is used for increasing an accuracy of the part code and/or of the combination of the source code and the time/date stamp, a confirmation is to be given. Other reasons for giving a confirmation are not to be excluded. The requester 27 can be used in case the receiving device 2 receives a feedback from the triggering device that the selection information is going to be sent. The requester 27 or 47 might for example comprise an indication such as a notification signal (a tone, a light, a display message etc.) destined for the user to for example let the user repeat the user action. The requester 57 might for example comprise a generator for generating the notification signal which is to be sent to the triggering device.

The counter 48 and/or 58 counts the selection information, for example per part code or per source code or per time/date stamp, to make statistics available, for example for adjusting the user profile.

The collecting apparatus 5 might be a third party collecting apparatus comprising the collector 54 for collecting the additional information linked to parts of the broadcasting information and for sending a collection of additional information to the user for example via the transmitter 53. The third party collecting apparatus is for example used for retrieving additional information such as for example songs in WAV format linked to parts of the broadcasting information such as the corresponding songs broadcasted by the source 3, and is for example used for collecting the songs in WAV format and for, as soon as a sufficient number of songs have been collected, writing them on a CD. This (audio) CD is to be transmitted to the user for example through mail. The selection signals counted mostly may then indicate the most popular song, which is to be written firstly, etc. The third party collecting apparatus may pay the bill for retrieving the additional information, and may send a higher bill to the user for the retrieving of the additional information and for the services. In case of the collecting apparatus being a third party collecting apparatus, the selection information might further comprise a user code defining the user or a location code defining the user's house and/or the user's devices, for billing purposes.

The embodiment with music on a CD is not the only application of the invention. Many more embodiments are possible, such as, for example, and not exclusively, the following items that may be sent to a user. A) The written content of a radio news bulletin and/or a television news bulletin, of the complete speech of a personality briefly heard on the radio and/or seen on the television, etc. B) Books, digital versatile disks as heard on the radio and/or as seen on the television, etc. C) Newspapers, magazines etc. D) More general, items that are advertised on the radio, or more information about those items, etc. E) A recording of a radio program and/or of a television program, etc.

Further, about the user confirmation, the user might have to answer a simple multiple-choice question in the case one button hit corresponds to more than one item (e.g. a book or more info about a book). This can be defined in the user profile. For example the user preference might be to obtain more information and to use that information later to eventually purchase. The user profile can be updated automatically by the system according to a user behavior (automated user profile configuration). The application learns the user profile as the application is being used. About the user profile, it can be edited in many ways. Direct edition by the user is also possible e.g. using a personal computer connected to the internet. (access user profile in device 5, and device 5 could populate it to devices 2 and/or 4).

An additional might be that the code information can also consist in references to program a recording on a user's recording system such as a video recorder, a multimedia personal computer, or a set top box on the television. Those systems can be programmed to record some television show for later viewing. When a user hears an announcement of a program on the radio it can be very convenient to immediately program the home recorder. Such a system would be easy to be implemented on a personal computer, a set top box or a digital versatile disk recorder, and a little more difficult to be implemented on an old fashioned video tape recorder (in which case an empty tape would (always) need to be present).

The wired connections can be any kind of wired connections such as electrical and optical connections based on modulation schemes. The wireless connections can be any kind of wireless connections such as infrared connections and radio frequency connections such as UMTS, GSM, DECT, GPRS, Bluetooth etc. Therefore, the triggering device may be a remote control, a mobile phone etc. And between each pair of blocks shown in Fig. 1 further (interfacing) blocks may be present. About the blocks shown in the Fig. 2-4, each block can be hardware, software or a combination of both.

Other addresses than the internet protocol addresses and other locations than the universal resource locations are not to be excluded. Other networks than internet networks are not to be excluded. The radio decoding signal may comprise any kind of data embedded in a radio signal. Other formats than the WAV formats are not to be excluded, such as MP3 formats etc.

The expression "for" in for example "for receiving" and "for converting" etc. does not exclude that other functions are performed as well, simultaneously or not. The expressions "X coupled to Y" and "a coupling between X and Y" and "coupling/couples X and Y" etc. do not exclude that an element Z is in between X and Y. The expressions "P comprises Q" and "P comprising Q" etc. do not exclude that an element R is comprised/included as well. The terms "a" and "an" do not exclude the possible presence of one or more pluralities.

The steps/functions of receiving and converting etc. do not exclude further steps, like for example, inter alia, the steps/functions described for the Figures.

## Claims

1. System (1) comprising a receiving device (2) for receiving broadcast information from a source (3), which receiving device (2) comprises a converter (23) for converting the broadcast information into audio/video information perceptible to a user, **characterized in that** the system (1) further comprises a triggering device (4) for, in response to a user action from the user, transmitting selection information defining a part of the broadcast information to a collecting apparatus (5) different from said source (3), which collecting apparatus (5) comprises a retriever (51) for, in response to a reception of the selection information, retrieving additional information linked to the part of the broadcasting information.

2. System (1) as defined in claim 1, **characterized in that** the broadcast information comprises a part code defining the part of the broadcast information, the receiving device (2) comprising a supplier (22) for supplying the part code to the triggering device (4), and the selection information comprising the part code.

3. System (1) as defined in claim 1 or 2, **characterized in that** the broadcast information comprises a source code defining the source (3), the receiving device (2) comprising a supplier (22) for supplying the source code to the triggering device (4), and the selection information comprising the source code, the system (1) further comprising a time/date stamp adder (25,45,55) for adding a time/date stamp to the source code.

4. System (1) as defined in claim 1, 2 or 3, **characterized in that** the system (1) further comprises a memory (26,46,56) for storing a user profile.

5. System (1) as defined in claim 1, 2, 3 or 4, **characterized in that** the system (1) further comprises a comparator (59) for comparing a parameter of the additional information with a threshold.

6. System (1) as defined in claim 1, 2, 3, 4 or 5, **characterized in that** the system (1) further comprises a requester (27,47,57) for requesting the user for a confirmation.

7. System (1) as defined in claim 1, 2, 3, 4, 5 or 6, **characterized in that** the system (1) further comprises a counter (48,58) for counting the selection information.

8. System (1) as defined in claim 1, 2, 3, 4, 5, 6 or 7, **characterized in that** the collecting apparatus (5) is a third party collecting apparatus (5) comprising a collector (54) for collecting additional information linked to parts of the broadcasting information and for sending a collection of additional information to the user.

9. Receiving device (2) for use in a system (1) as defined in claim 1 comprising the receiving device (2) for receiving broadcast information from a source (3), which receiving device (2) comprises a converter (23) for converting the broadcast information into audio/video information perceptible to a user, **characterized in that** the system (1) further comprises the triggering device (4) for, in response to a user action from the user, transmitting selection information defining a part of the broadcast information to a collecting apparatus (5) different from said source (3), which collecting apparatus (5) comprises a retriever (51) for, in response to a reception of the selection information, retrieving additional information linked to the part of the broadcasting information, the receiving device (2) comprising a supplier (22) for supplying a code to the triggering device (4), and the selection information comprising the code.

10. Triggering device (4) for use in a system (1) as defined in claim 1 comprising a receiving device (2) for receiving broadcast information from a source (3), which receiving device (2) comprises a converter (23) for converting the broadcast information into audio/video information perceptible to a user, **characterized in that** the system (1) further comprises the triggering device (4) for, in response to a user action from the user, transmitting selection information defining a part of the broadcast information to a collecting apparatus (5) different from said source (3), which collecting apparatus (5) comprises a retriever (51) for, in response to a reception of the selection information, retrieving additional information linked to the part of the broadcasting information.

11. Collecting apparatus (5) for use in a system (1) as defined in claim 1 comprising a receiving device (2) for receiving broadcast information from a source (3), which receiving device (2) comprises a converter (23) for converting the broadcast information into audio/video information perceptible to a user, **characterized in that** the system (1) further comprises a triggering device (4) for, in response to a user action from the user, transmitting selection information defining a part of the broadcast information to the collecting apparatus (5) different from said source (3), which collecting apparatus (5) comprises a retriever (51) for, in response to a reception of the selection information, retrieving additional information linked to the part of the broadcasting information.

12. Method for use in a system (1) as defined in claim 1 and comprising a receiving step of receiving broadcast information from a source (3) and a converting step of converting the broadcast information into audio/video information perceptible to a user, **characterized in that** the method further comprises a triggering step of, in response to a user action from the user, transmitting selection information defining a part of the broadcast information to a collecting apparatus (5) different from said source (3) and a retrieving step of, in response to a reception of the selection information, retrieving additional information linked to the part of the broadcasting information.

13. Processor program product for use in a system (1) as defined in claim 1 and comprising a receiving function of receiving broadcast information from a source (3) and a converting function of converting the broadcast information into audio/video information perceptible to a user, **characterized in that** the processor program product further comprises a triggering function of, in response to a user action from the user, transmitting selection information defining a part of the broadcast information to a collecting apparatus (5) different from said source (3) and a retrieving function of, in response to a reception of the selection information, retrieving additional information linked to the part of the broadcasting information.
